# EUROPÄISCHE PATENTSCHRIFT

(11) **EP 1 086 472 B1**
(45) Veröffentlichungstag und Bekanntmachung des Hinweises auf die Patenterteilung: **20.06.2007**
(21) Anmeldenummer: 00929253.3
(22) Anmeldetag: 28.03.2000
(51) Int. Cl.: H01C 17/26, G01K 7/22

(54) **TEMPERATURFÜHLER MIT WENIGSTENS EINER LEITERBAHN UND VERFAHREN ZUR HERSTELLUNG EINES TEMPERATURFÜHLERS**
TEMPERATURE PROBE, COMPRISING AT LEAST ONE CONDUCTOR STRIP AND A METHOD FOR PRODUCING A PROBE OF THIS TYPE
SONDE DE TEMPERATURE PRESENTANT AU MOINS UN TRACE CONDUCTEUR ET PROCEDE DE PRODUCTION CORRESPONDANT

(30) Priorität: 07.04.1999 DE 19915525
(43) Veröffentlichungstag der Anmeldung: 28.03.2001
(73) Patentinhaber: ROBERT BOSCH GMBH, 70442 Stuttgart (DE)
(72) Erfinder: SCHULTE, Thomas, D-70376 Stuttgart (DE); BRINZ, Thomas, D-73266 Bissingen Unter der Teck (DE); WEBER, Lothar, D-70499 Stuttgart (DE)
(86) Internationale Anmeldenummer: PCT/DE2000/000935
(87) Internationale Veröffentlichungsnummer: WO 2000/062310

(56) Entgegenhaltungen:
- DE-C- 19 636 493
- US-A- 3 479 216
- US-A- 3 700 857
- US-A- 3 793 717
- US-A- 5 264 288

## Beschreibung

Die Erfindung betrifft einen Temperaturfühler mit wenigstens einer Leiterbahn und Verfahren zur Herstellung eines solchen Temperaturfühlers mit den im Oberbegriff der Ansprüche 1 bzw. 5 genannten Merkmalen.

### Stand der Technik

Temperaturfühler der gattungsgemäßen Art sind bekannt. Sie weisen üblicherweise eine Leiterbahn auf, an der eine temperaturabhängige Veränderung eines Widerstands der Leiterbahn erfaßt und ausgewertet wird. Eine solche Leiterbahn kann dabei aus einem Cermet bestehen, da sich diese durch besonders große Widerstandstemperaturkoeffizienten auszeichnen. Voraussetzung für eine Erfassung des Widerstands ist eine bestehende Leitfähigkeit.

Nachteilig bei dem bekannten Verfahren ist, daß die Leitfähigkeit von Cermeten auf Widerstände im Ohmbereich beschränkt ist. Besonders günstig für eine fehlerfreie Erfassung von Temperaturänderungen ist jedoch eine Messung, bei der die Leiterbahn Widerstände mit mehreren hundert Ohm aufweist. Zwar kann durch eine Verringerung des Volumenanteils des Metalls am Cermet der Widerstand erhöht werden, jedoch wird das Cermet unterhalb einer Perkulationsgrenze nichtleitend. Um höhere Widerstände zu erhalten, wird bei den bekannten Temperaturfühlern auf Cermetbasis daher die Leiterbahn verlängert, und es ist somit nicht möglich, hohe Widerstände auf kleinem Raum zu realisieren.

Aus der DE 196 36 493 C1 ist bekannt, ein Zündkerzenwiderstand durch eine stromlose Abscheidung eines Metalls auf Glas- oder Keramikpulver herzustellen. Ein solcher Zündkerzenwiderstand hat jedoch einen Widerstandsbereich von mehreren tausend Ohm und ist derart konzipiert, daß er Belastungen, die aufgrund einer angelegten Hochspannung auftreten, standhält. Nachteilig hierbei ist, daß die Herstellung somit aufwendig und kostenintensiv ist.

### Vorteile der Erfindung

Der erfindungsgemäße Temperaturfühler und das Verfahren zur Herstellung eines solchen Temperaturfühlers mit den Merkmalen der Ansprüche 1 bzw. 5 zeichnen sich dadurch aus, daß Leiterbahnen mit hohen Widerständen in einfacher und kostengünstiger Weise hergestellt werden können. Dadurch, daß die Leiterbahnen durch ein Metall, welches eine Oberfläche eines Trägers aus einem Metalloxid, -carbid oder -nitrid bedeckt, gebildet wird, wird der Widerstand lediglich durch eine Dicke der Metallschicht bestimmt, und somit ist die bisherige Beschränkung aufgrund der Perkulationsgrenze behoben.

Besonders vorteilhaft ist eine hohe Variabilität des verwendeten Metalls. Mittels eines stromlosen Bades zur Metallabscheidung wird dieses auf den Träger aufgebracht. Anschließende thermische Behandlung führt dann zu einer Verdichtung der benetzten Bereiche auf der Oberfläche des Trägers, und es entsteht eine leitfähige Schicht. Als Metalle einsetzbar sind Cobalt, Nickel, Kupfer, Platin und andere.

Als Träger können Partikel, aus einem Metalloxide, -carbide oder -nitride dienen, wie beispielsweise Aluminiumoxid oder Zirkoniumdioxid, wobei letzteres insbesondere zur Herstellung laminierter Schichtsensoren geeignet ist. Zur Gewährung der Funktionalität solcher Schichtsensoren ist häufig eine genaue Erfassung der Temperatur notwendig. Der erfindungsgemäße Temperaturfühler hat nur einen geringen Raumbedarf und zeichnet sich durch einen für die Temperaturerfassung günstigen Widerstandsbereich aus.

Weitere bevorzugte Ausgestaltungen der Erfindung ergeben sich aus den übrigen, in den Unteransprüchen genannten Merkmalen.

### Zeichnungen

Die Erfindung wird nachfolgend in einem Ausführungsbeispiel anhand der zugehörigen Zeichnungen näher erläutert. Es zeigen:
- Figur 1: eine schematische Draufsicht auf einen Temperaturfühler und
- Figur 2: eine schematische Schnittansicht durch Partikel einer Leiterbahn des Temperaturfühlers.

### Beschreibung des Ausführungsbeispiels

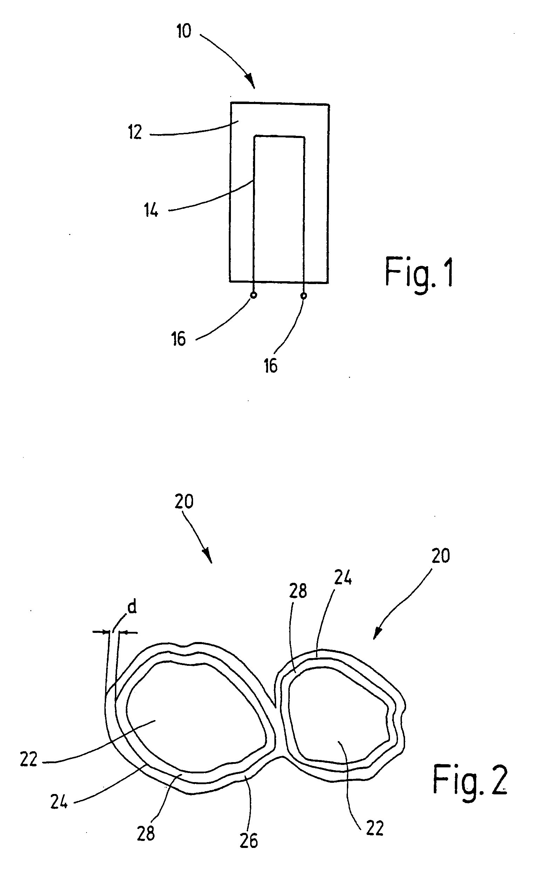

In der Figur 1 ist eine mögliche Ausführungsform eines erfindungsgemäßen Temperaturfühlers 10 dargestellt. Ein solcher Temperaturfühler 10 kann beispielsweise ein Funktionselement eines laminierten Schichtsensors sein. In diesem Fall weist der Sensor eine Schicht 12 auf, in der eine Leiterbahn 14 eingebettet ist, die wiederum über zwei Kontaktpunkte 16 mit einer hier nicht dargestellten Auswerteeinrichtung verbunden ist.

Eine Erfassung einer Temperatur kann über eine Messung eines Widerstands der Leiterbahn 14 erfolgen. Dazu wird die Leiterbahn 14 bevorzugt mit einer Wechselspannung beaufschlagt.

Findet der Temperaturfühler 10 Anwendung in dem Schichtsensor, so besteht die Leiterbahn 14 üblicherweise aus einem Metalloxid wie Zirkoniumdioxid oder Aluminiumoxid und einem Metall wie Platin.

Figur 2 zeigt einen schematischen Querschnitt durch zwei Partikel 20, die Bestandteil der Leiterbahn 14 sind. Die Partikel 20 bestehen aus einem inneren Kern 22 einer Grenzschicht 28 und einer äußeren Metallschicht 26, die auf einer Oberfläche 24 liegt. Ein solcher Partikel 20 kann wie folgt dargestellt werden:

Als Ausgangsmaterial dient ein Träger aus einem Metalloxid, -carbid oder -nitrid, der als Pulver mit einer wählbaren Korngröße eingesetzt wird. Ein einzelnes Korn des Trägers besitzt die Oberfläche 24. Besonders geeignet sind Zirkoriiumdioxid- und Aluminiumoxid-Körner.

Zunächst werden durch Reduktion Palladium-Keime auf der Oberfläche 24 abgeschieden, die als Kristallisationskeime für eine stromlose Abscheidung der Metalle dienen, die später die Metallschicht 26 bilden sollen. Das stromlose Abscheiden von Metallen nach diesem Verfahren ist bekannt und soll im Rahmen der vorliegenden Beschreibung nicht näher erläutert werden. Als Metalle können beispielsweise Cobalt, Nickel, Kupfer oder Platin abgeschieden werden.

Nach der Abscheidung der Metalle auf der Oberfläche 24 werden diese einer thermischen Behandlung unterzogen. Die Behandlung dient einerseits dem Verdichten und dauerhaften Fügen der metallischen Schicht 26 auf der Oberfläche 24, und andererseits wird auf diese Weise eine leitfähige Schicht erzeugt, die die Leiterbahn 14 darstellt, indem benachbarte Partikel 20 im Bereich der metallischen Schicht 26 miteinander verschmelzen.

Das Metall kann während der thermischen Behandlung in das Trägerkorn 22 diffundieren und bildet so die Grenzschicht 28 aus. Je nach Dauer der Behandlung und Höhe der Temperatur kann auf diese Weise eine Schichtdicke d der Metallschicht 26 beeinflußt werden.

Der Widerstand einer solchen Leiterbahn 14 ist im wesentlichen abhängig von der Metallschicht 26. Dabei stellt die Metallschicht 26 einen Schichtwiderstand dar, dessen Größe durch die Schichtdicke d, die ein Maß für den Querschnitt der Leiterbahn 14 darstellt, gegeben ist. Durch eine Verringerung der Schichtdicke d kann der Widerstand der Leiterbahn 14 erhöht werden.

## Patentansprüche

1. Temperaturfühler (10) mit wenigstens einer Leiterbahn (14), wobei eine temperaturabhängige Änderung eines Widerstands der Leiterbahn erfaßt und ausgewertet wird, **dadurch gekennzeichnet, daß** die Leiterbahn (14) aus einem Metall, welches eine Oberfläche (24) eines Trägers aus einem Metalloxid, -carbid oder -nitrid bedeckt, besteht.

2. Temperaturfühler (10) nach Anspruch 1, **dadurch gekennzeichnet, daß** der Träger aus Zirkoniumdioxid und/oder Aluminiumoxid besteht.

3. Temperaturfühler (10) nach einem der vorhergehenden Ansprüche, **dadurch gekennzeichnet, daß** das Metall Cobalt, Nickel, Kupfer oder Platin ist.

4. Temperaturfühler (10) nach einem der vorhergehenden Ansprüche, **dadurch gekennzeichnet, daß** die Leiterbahn (14) zur Erfassung des Widerstands mit einer Wechselspannung beaufschlagbar ist.

5. Verfahren zur Herstellung eines Temperaturfühlers (10) mit wenigstens einer Leiterbahn (14), wobei durch den Temperaturfühler (10) eine temperaturabhängige Änderung eines Widerstands der Leiterbahn (14) erfaßt und ausgewertet wird, **dadurch gekennzeichnet, daß** die Leiterbahn (14) durch stromloses Abscheiden eines Metalls auf eine Oberfläche (24) eines Trägers aus einem Metalloxid, -nitrid oder -carbid und anschließender thermischer Behandlung gebildet wird.

6. Verfahren nach Anspruch 5, **dadurch gekennzeichnet, daß** eine Schichtdicke (d) einer Metallschicht (26), die auf der Oberfläche (24) des Trägers liegt, durch die Dauer und/oder gewählte Temperatur während einer thermischen Behandlung bestimmt wird.

7. Verfahren nach Anspruch 5 und 6, **dadurch gekennzeichnet, daß** der Träger als ein Pulver eingesetzt wird.

8. Verwendung eines Temperaturfühlers (10) nach einem der Ansprüche 1 bis 7 in einer Schicht (12) eines laminierten Schichtsensors.

## Claims

1. Temperature probe (10) comprising at least one conductor strip (14), a temperature-dependent change in a resistance of the conductor strip being detected and evaluated, **characterized in that** the conductor strip (14) consists of a metal which covers a surface (24) of a metal-oxide, metal-carbide or metal-nitride substrate.

2. Temperature probe (10) according to Claim 1, **characterized in that** the substrate consists of zirconium dioxide and/or aluminium oxide.

3. Temperature probe (10) according to one of the preceding claims, **characterized in that** the metal is cobalt, nickel, copper or platinum.

4. Temperature probe (10) according to one of the preceding claims, **characterized in that**, for detecting the resistance, the conductor strip (14) can be subjected to an alternating voltage.

5. Method for producing a temperature probe (10) comprising at least one conductor strip (14), a temperature-dependent change in a resistance of the conductor strip (14) being detected and evaluated by the temperature probe (10), **characterized in that** the conductor strip (14) is formed by electroless depositing of a metal onto a surface (24) of a metal-oxide, metal-nitride or metal-carbide substrate and subsequent thermal treatment.

6. Method according to Claim 5, **characterized in that** a layer thickness (d) of a metal layer (26), which lies on the surface (24) of the substrate, is determined by the duration and/or chosen temperature of a thermal treatment.

7. Method according to Claims 5 and 6, **characterized in that** the substrate is used as a powder.

8. Use of a temperature probe (10) according to one of Claims 1 to 7 in a layer (12) of a laminated layer sensor.

## Revendications

1. Sonde de température (10) comportant au moins un chemin conducteur (14), dans laquelle on détecte et on exploite une variation de résistance du chemin conducteur, en fonction de la température
**caractérisée en ce que**
le chemin conducteur (14) est composée d'un métal, qui recouvre une surface (24) d'un support en un oxyde, un carbure ou un nitrure d'un métal.

2. Sonde de température (10) selon la revendication 1,
**caractérisée en ce que**
le support se compose d'oxyde de zirconium et/ou d'oxyde d'aluminium.

3. Sonde de température (10) selon l'une quelconque des revendications précédentes,
**caractérisée en ce que**
le métal est le cobalt, le nickel, le cuivre ou le platine.

4. Sonde de température (10) selon l'une quelconque des revendications précédentes,
**caractérisée en ce que**
le chemin conducteur (14) peut être alimenté avec une tension alternative pour détecter la résistance.

5. Procédé de fabrication d'une sonde de température (10) comportant au moins un chemin conducteur (14), dont on détecte et on exploite avec la sonde de température (10) une variation de résistance du chemin conducteur (14), en fonction de la température,
**caractérisé en ce qu'**
on forme le chemin conducteur (14) par un dépôt sans courant d'un métal sur une surface (24) d'un support en un oxyde, un nitrure ou un carbure d'un métal et ensuite par un traitement thermique.

6. Procédé selon la revendication 5,
**caractérisé en ce qu'**
on détermine l'épaisseur de couche (d) d'une couche métallique (26), sur la surface (24) du support, par la durée et/ou la température choisie pendant un traitement thermique.

7. Procédé selon la revendication 5 et 6,
**caractérisé en ce que**
le support est utilisé sous forme de poudre.

8. Utilisation de la sonde de température (10) selon l'une quelconque des revendications 1 à 7, dans une couche (12) d'un détecteur en couches stratifiées.
